# EUROPÄISCHE PATENTSCHRIFT

(11) **EP 2 709 438 B1**
(45) Veröffentlichungstag und Bekanntmachung des Hinweises auf die Patenterteilung: **04.05.2016**
(21) Anmeldenummer: 11720502.1
(22) Anmeldetag: 19.05.2011
(51) Int. Cl.: A01G 27/04

(54) **WASSERTRANSPORTLEITUNG FÜR PFLANZENBEWÄSSERUNGSEINRICHTUNG UND PFLANZENBEWÄSSERUNGSEINRICHTUNG**
WATER TRANSPORT LINE FOR A PLANT WATERING SYSTEM AND PLANT WATERING SYSTEM
CONDUITE D'EAU POUR SYSTÈME D'ARROSAGE DE PLANTES ET SYSTÈME D'ARROSAGE DE PLANTES

(43) Veröffentlichungstag der Anmeldung: 26.03.2014
(73) Patentinhaber: HUSQVARNA AB, 561 82 Huskvarna (SE)
(72) Erfinder: CLAUS, Ralf, 89171 Illerkirchberg (DE); RENNER, Thomas, 89079 Ulm (DE)
(74) Vertreter: Finkele, Rolf
(86) Internationale Anmeldenummer: PCT/EP2011/058152
(87) Internationale Veröffentlichungsnummer: WO 2012/155980

(56) Entgegenhaltungen:
- EP-B1- 0 814 188
- DE-C- 335 788

## Beschreibung

Die Erfindung betrifft eine Wassertransportleitung für eine Pflanzenbewässerungseinrichtung und eine Pflanzenbewässerungseinrichtung, insbesondere nach Art einer Topfbewässerung, sowie eine Pflanzenbewässerungseinrichtung.

Für die Bewässerung von Topfpflanzen sind Bewässerungseinrichtungen bekannt, bei welchen wenigstens ein Strang aus faserigem Material als Wassertransportleitung zwischen einem Vorratsbehälter und einem Erdsubstrat um die zu bewässernde Pflanze verläuft. Durch den Kapillareffekt innerhalb des faserigen Materials wird mit geringer Fließrate Wasser aus dem Vorratsbehälter über den Strang aus faserigem Material zu dem Erdsubstrat transportiert, insbesondere zumindest abschnittsweise auch entgegen der Schwerkraft. Als faseriges Material dienen beispielsweise Wollfäden oder andere organische Fasern, aber auch Kunststofffasern gebräuchlich. Der Strang aus faserigem Material kann von einem wasserdichten Schlauch umschlossen sein.

Solche Wassertransportleitungen erweisen sich als nicht befriedigend hinsichtlich einer zuverlässigen und gleichmäßigen Bewässerung.

Der vorliegenden Erfindung liegt die Aufgabe zugrunde, eine für Bewässerungseinrichtungen nach Art der Topfbewässerung geeignete Wassertransportleitung mit einem Strang aus faserigem Material sowie eine Bewässerungseinrichtung mit einer solchen Wassertransportleitung anzugeben.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Die Verwendung eines Vliesstoffes aus Kunststofffasern, welcher zumindest überwiegend, d. h. zu mehr als 50 Gewichtsprozent, vorzugsweise im wesentlichen vollständig aus Mikrofilamenten mit einem über alle Fasern gemittelten mittleren Titer (auch als Fasergewicht bezeichnet) von weniger als 1,0 dTex und aus wenigstens zwei unterschiedlichen Materialien besteht, erweist sich überraschenderweise als gegenüber für die Kapillarbewässerung gebräuchlichen faserigen Materialien besonders zuverlässig in der Bewässerung eines Erdsubstrats in einem Pflanzgefäß. Vorzugsweise beträgt der mittlere Titer der Fasern des Vliesstoffes weniger als 0,6 dTex, insbesondere weniger als 0,3 dTex.

Derartige Vliesstoffe sind an sich bekannt, z. B. aus DE 69725051 T2 oder DE 10026281 B4. Die Herstellung der Vliesstoffe erfolgt typischerweise durch Spinnen von Fasern, welche im Querschnitt mehrere Teilflächen zu wenigstens zwei unterschiedlichen Kunststoffmaterialien aufweisen und Auftrennen der Fasern in in sich materialhomogene Mikrofilamente durch thermische oder insbesondere mechanische Einwirkung

In vorteilhafter Weiterbildung kann die Wassertransportleitung algizides Material enthalten, welches das Algenwachstum in der Wassertransportleitung hemmt. Das algizide Material kann vorteilhafterweise in Form von Metallfäden, insbesondere aus Kupfer oder Silber, oder aus mit diesen Materialien beschichteten Fäden in den Vliesstoff integriert sein.

Die Wassertransportleitung ist vorteilhafterweise zumindest in ihrem überwiegenden Längsverlauf als flaches Band ausgeführt. Vorteilhafterweise ist das faserige Material über mehr als 50 % des Längsverlaufs der Wassertransportleitung von einer wasserdichten Hülle, insbesondere einem Schlauch umschlossen. Vorteilhafterweise liegt der Vliesstoff unter elastischer Verformung der Hülle oder des faserigen Materials an der Innenseite der Hülle an. An den entgegen gesetzten Enden der Transportleitung liegt der Vliesstoff ohne Umhüllung frei, um Wasser. aus dem Wasservorratsbehälter aufzunehmen und an die zu bewässernde Pflanze abzugeben.

Die Erfindung ist nachfolgend anhand bevorzugter Ausführungsbeispiele unter Bezugnahme auf die Abbildungen noch eingehend veranschaulicht. Dabei zeigt:
- Fig. 1: Faserquerschnitte,
- Fig. 2: einen Leitungsabschnitt,
- Fig. 3: eine Bewässerungseinrichtung.

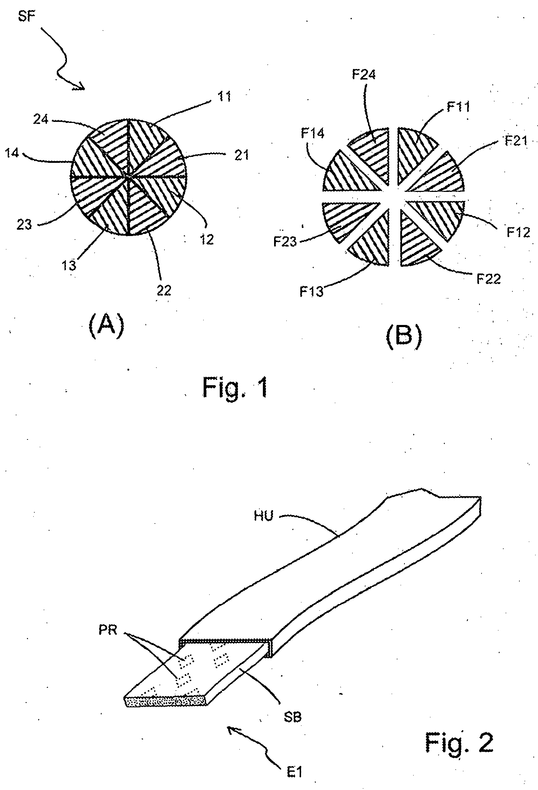

Fig. 1 zeigt zwei Faserquerschnitte an sich bekannter Kunststofffasern der im eingangs bereits genannten Stand der Technik beschriebenen Art. Dabei werden in einem Spinnverfahren Fasern der in Fig. 1 (A) mit SF bezeichneten Art gesponnen, welche aus zwei sich nicht mischenden Kunststoffen bestehen. Die Kunststoffe bilden im Querschnitt der Faser SF an Grenzflächen aneinanderstoßende Abschnitte, welche für ein erstes Kunststoffmaterial in Fig. 1 (A) mit 11, 12, 13, 14 und für ein zweites Kunststoffmaterial mit 21, 22, 23 und 24 bezeichnet sind. Die Fasern werden zu einem losen Verbund gelegt und durch thermische oder insbesondere mechanische Einwirkung, beispielsweise Hochdruck-Wasserstrahlen oder Dampf, werden die Fasern aufgespalten in jeweils in sich materialhomogene Mikrofilamente entsprechend den Teilbereichen des Querschnitts nach Fig. 1 (A).

In Fig. 1 (B) sind schematisch die aus einer Faser SF entstehenden Mikrofilamente dargestellt und mit F11 bis F14 und F21 bis F24 bezeichnet. Typischerweise wird bei der Aufspaltung eines losen Verbundes aus einer Vielzahl von Fasern zugleich auch eine Verbindung und Verfestigung der verschiedenen Mikrofilamente untereinander zu einem Vliesstoffverbund bewirkt, wobei typischerweise die Fasern und die einzelnen Mikrofilamente als Endlosfasern betrachtet werden können, bei welchen Faserendeffekte weitgehend vernachlässigbar sind. Die in Fig. 1 (B) noch der Anschaulichkeit halber gewählte räumliche Zuordnung der einzelnen Mikrofilamente einer Faser ist dabei im wesentlichen aufgehoben.

Ein auf diese an sich bekannte Art hergestellter Vliesstoff bildet eine flache, flexible Stoffbahn. Aus dieser wird für die Verwendung eines solchen Stoffes in einer Pflanzenbewässerungseinrichtung ein Streifen ausgeschnitten, welcher in einer in Fig. 2 mit einem Endabschnitt dargestellten Wassertransportleitung über den überwiegenden Teil des Längsverlaufs der Wassertransportleitung von einer wasserdichten Hülle HU umgeben ist. Der Streifen SB aus dem Vliesstoff mit den Mikrofilamenten nach Fig. 1 füllt dabei den von der Hülle HU gebildeten Zwischenraum insbesondere in Richtung der kurzen Achse des Innenraums der Hülle HU, also senkrecht zur Fläche des flächigen Vliesstoffes, im wesentlichen vollständig aus. Vorteilhafterweise kann der Vliesstoff des Bandes SB unter leichter elastischer Verformung der Hülle-HU und/oder des Vliesstoffes selbst an der Innenwand der Hülle anliegen. Die relativen Abmessungen der Darstellung in Fig. 2 sind nicht maßstäblich zu sehen.

Als vorteilhaft hat sich ferner erwiesen, wenn in dem flachen Band SB aus dem faserigen Material des Vliesstoffes gegen die Bandfläche-erhabene Prägestrukturen PR in einer oder beiden gegenüber liegenden Flächen des Bandes vorliegen. Solche Prägestrukturen PR sind in Fig. 2 mit punktierten Linien auf der dem Betrachter zugewandten Bandfläche dargestellt.

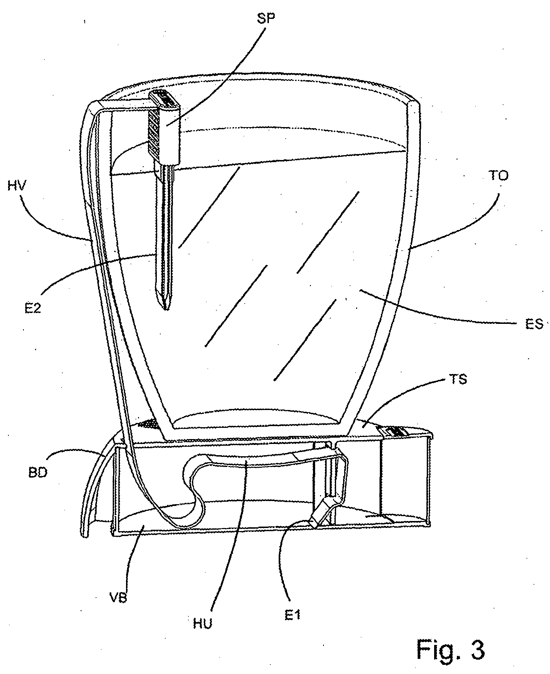

Der in Fig. 2 dargestellte Ausschnitt aus einer Wassertransportleitung mit dem Vliesstoff als faserigem Material kann insbesondere das in einen Wasserbehälter einer Pflanzenbewässerungseinrichtung ragende erste Ende E1 der Wassertransportleitung bilden, wie in Fig. 3 in der schematischen Ansicht einer Pflanzenbewässerungseinrichtung dargestellt ist. Die in Fig. 3 dargestellte Pflanzenbewässerungseinrichtung enthält insbesondere einen Wasservorratsbehälter VB, welcher durch eine Abdeckung BD nach oben verschlossen ist. Eine Oberseite der Abdeckung BD bildet zugleich eine Standfläche TS für ein Pflanzgefäß TO, welches ein Erdsubstrat ES und wenigstens eine, in Fig. 3 nicht mit dargestellte Pflanze enthalten kann. An dem dem ersten Ende E1 abgewandten zweiten Ende E2 der Wassertransportleitung ist ein mechanisch stabiler Erdspieß SP vorgesehen, welcher in das Erdsubstrat ES eindrückbar ist und an welchem das faserige Material des Vliesstoffes ohne Umhüllung mit dem Erdsubstrat ES in Kontakt steht, um Wasser an das Erdsubstrat ES abzugeben. Auch für die Wasserabgabe an das Erdsubstrat erweisen sich die Prägestrukturen PR als besonders vorteilhaft.

Zwischen dem ersten Ende E1 und dem zweiten Ende E2 bzw. dem bei dem zweiten Ende E2 angeordneten Erdspieß SP ist das Band aus dem faserigen Vliesstoff durch die wasserdichte Hülle HU umgeben, so dass kein Wasser in die Umgebung verdunstet. Die Transportleitung kann insbesondere in einem überwiegend vertikalen Abschnitt HV Wasser in bei der Kapillarbewässerung an sich bekannten Art entgegen der Schwerkraft unter Ausnutzung des Kapillareffekts transportieren. Die Wassertransportleitung ist vorteilhafterweise von dem ersten Ende E1 her bis zum Erdspieß SP oder bis in dessen Nähe flexibel ausgeführt.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen der anhängenden Ansprüche in mancherlei Weise abwandelbar.

## Patentansprüche

1. Wassertransportleitung mit faserigem Material, welches zum Transport von Wasser in einer Pflanzenbewässerungseinrichtung, insbesondere nach Art einer Topfbewässerung entgegen der Schwerkraft unter Ausnutzung des Kapillareffekts in dem faserigen Material (SF) geeignet ist, wobei das faserige Material (SF) durch einen flexiblen Vliesstoff gebildet ist, **dadurch gekennzeichnet, dass** der Vliesstoff zumindest überwiegend aus Mkrofilamenten (F11, F12, F13, F14, F21, F22, F23, F24) mit einem mittleren Titer von weniger als 1,0 dTex und aus wenigstens zwei verschiedenen Kunststoffmaterialien (11, 12, 13, 14, 21, 22, 23, 24) besteht.

2. Wassertransportleitung nach Anspruch 1, **dadurch gekennzeichnet, dass** der mittlere Titer der Mikrofilamente (F11, F12, F13, F14, F21, F22, F23, F24) weniger als 0,6 dTex, insbesondere weniger als 0,3 dTex beträgt.

3. Wassertransportleitung nach Anspruch 1 oder 2, **dadurch gekennzeichnet, dass** der Vliesstoff zumindest im überwiegenden Längsverlauf der Wassertransportleitung bandförmig ausgebildet ist.

4. Wassertransportleitung nach einem der Ansprüche 1 bis 3, **dadurch gekennzeichnet, dass** der Vliesstoff mit Prägestrukturen (PR) gegen eine durchgehende Stofffläche versehen ist.

5. Wassertransportleitung nach einem der Ansprüche 1 bis 4, **dadurch gekennzeichnet, dass** das faserige Material (SF) zumindest im überwiegenden Längsverlauf der Wassertransportleitung von einer wasserdichten Hülle (HU) umgeben ist.

6. Wassertransportleitung nach Anspruch 5, **dadurch gekennzeichnet, dass** das faserige Material (SF) unter elastischer Verformung der Hülle (HU) und/oder des faserigen Materials (SF) an der Hülle (HU) anlegt.

7. Wassertransportleitung nach einem der Ansprüche 1 bis 6, **dadurch gekennzeichnet, dass** an einem Ende der Wassertransportleitung ein formstabiler Erdspieß (SP) angeordnet ist.

8. Wassertransportleitung nach einem der Ansprüche 1 bis 9, **dadurch gekennzeichnet, dass** sie algizides Material enthält.

9. Wassertransportleitung nach Anspruch 8, **dadurch gekennzeichnet, dass** das algizide Material in Form von Metallfäden, insbesondere aus Kupfer oder Silber vorliegt.

10. Pflanzenbewässerungseinrichtung zur Bewässerung wenigstens einer Pflanze in einem Pflanzgefäß mit einem Wasser-Vorratsbehälter und mit einer Wassertransportleitung nach einem der Ansprüche 1 bis 9.

11. Pflanzenbewässerungseinrichtung nach Anspruch 10, **dadurch gekennzeichnet, dass** eine Abdeckung (BD) des Wasserbehälters als eine Stellfläche für ein Pflanzgefäß ausgebildet ist.

12. Verwendung eines Vliesstoffes für eine Wassertransportleitung einer Pflanzenbewässerungseinrichtung, **dadurch gekennzeichnet, dass** der Vliesstoff zumindest überwiegend aus Mikrofilamenten (F11, F12, F13, F14, F21, F22, F23, F24) mit einem mittleren Titer von weniger als 1,0 dTex und aus wenigstens zwei verschiedenen Kunststoffmaterialien (11, 12, 13, 14, 21, 22, 23, 24) besteht.

13. Verwendung nach Anspruch 12, **dadurch gekennzeichnet, dass** in den Vliesstoff algizides Material, insbesondere in Form von Metallfasern integriert wird.

## Claims

1. Water transport line having fibrous material which is suitable for transporting water in a plant watering installation, in particular in the manner of watering pots counter to gravity by utilizing the capillary effect in the fibrous material (SF), wherein the fibrous material (SF) is formed by a flexible non-woven fabric, **characterized in that** the non-woven fabric is at least largely composed of microfilaments (F11, F12, F13, F14, F21, F22, F23, F24) having a mean count of less than 1.0 dTex, and of at least two dissimilar plastics materials (11, 12, 13, 14, 21, 22, 23, 24).

2. Water transport line according to Claim 1, **characterized in that** the mean count of the microfilaments (F11, F12, F13, F14, F21, F22, F23, F24) is less than 0.6 dTex, in particular less than 0.3 dTex.

3. Water transport line according to Claim 1 or 2, **characterized in that** the non-woven fabric at least in the majority of the longitudinal profile of the water transport line is configured in a tape-shaped manner.

4. Water transport line according to one of Claims 1 to 3, **characterized in that** the non-woven fabric in relation to a continuous fabric face is provided with embossed structures (PR).

5. Water transport line according to one of Claims 1 to 4, **characterized in that** the fibrous material (SF) at least in the majority of the longitudinal profile of the water transport line is surrounded by a water-tight sheathing (HU).

6. Water transport line according to Claim 5, **characterized in that** the fibrous material (SF) bears on the sheathing (HU) while elastically deforming the sheathing (HU) and/or the fibrous material (SF).

7. Water transport line according to one of Claims 1 to 6, **characterized in that** a dimensionally stable earth spike (SP) is disposed at one end of the water transport line.

8. Water transport line according to one of Claims 1 to 9, **characterized in that** the former contains algaecide material.

9. Water transport line according to Claim 8, **characterized in that** the algaecide material is present in the form of metallic threads, in particular from copper or silver.

10. Plant watering installation for watering at least one plant in a plant vessel, having a water reservoir container and a water transport line according to one of Claims 1 to 9.

11. Plant watering installation according to Claim 10, **characterized in that** a covering (BD) of the water container is configured as a utility space for a plant vessel.

12. Use of a non-woven fabric for a water transport line of a plant watering installation, **characterized in that** the non-woven fabric is at least largely composed of microfilaments (F11, F12, F13, F14, F21, F22, F23, F24) having a mean count of less than 1.0 dTex, and of at least two dissimilar plastics materials (11, 12, 13, 14, 21, 22, 23, 24).

13. Use according to Claim 12, **characterized in that** algaecide material, in particular in the form of metallic threads, is integrated in the non-woven fabric.

## Revendications

1. Conduite de transport d'eau en matériau fibreux, qui convient pour le transport d'eau dans un système d'arrosage de plantes, en particulier à la manière d'un arrosage en pot contre la pesanteur avec utilisation de l'effet capillaire dans le matériau fibreux (SF), dans laquelle le matériau fibreux (SF) est formé par un matériau non tissé flexible, **caractérisée en ce que** le matériau non tissé se compose au moins principalement de microfilaments (F11, F12, F13, F14, F21, F22, F23, F24) avec un titre moyen inférieur à 1,0 ° dTex et d'au moins deux matières plastiques différentes (11, 12, 13, 14, 21, 22, 23, 24).

2. Conduite de transport d'eau selon la revendication 1, **caractérisée en ce que** le titre moyen des microfilaments (F11, F12, F13, F14, F21, F22, F23, F24) est inférieur à 0,6 dTex., et vaut en particulier moins de 0,3 dTex.

3. Conduite de transport d'eau selon la revendication 1 ou 2, **caractérisée en ce que** le matériau non tissé est réalisé en forme de bande au moins dans le tracé longitudinal principal de la conduite de transport d'eau.

4. Conduite de transport d'eau selon l'une quelconque des revendications 1 à 3, **caractérisée en ce que** le matériau non tissé est muni de structures gaufrées (PR) contre une face de matériau continue.

5. Conduite de transport d'eau selon l'une quelconque des revendications 1 à 4, **caractérisée en ce que** le matériau non tissé (SF) est entouré par une gaine étanche à l'eau (HU) au moins dans le tracé longitudinal principal de la conduite de transport d'eau.

6. Conduite de transport d'eau selon la revendication 5, **caractérisée en ce que** le matériau fibreux (SF) s'appuie sur la gaine (HU) avec déformation élastique de la gaine (HU) et/ou du matériau fibreux (SF).

7. Conduite de transport d'eau selon l'une quelconque des revendications 1 à 6, **caractérisée en ce qu'**une pique de terre (SP) de forme stable est disposée à une extrémité de la conduite de transport d'eau.

8. Conduite de transport d'eau selon l'une quelconque des revendications 1 à 9, **caractérisée en ce qu'**elle contient des matières algicides.

9. Conduite de transport d'eau selon la revendication 8, **caractérisée en ce que** les matières algicides sont présentes sous la forme de fils métalliques, en particulier en cuivre ou en argent.

10. Système d'arrosage de plantes pour l'arrosage d'au moins une plante dans un pot de fleur avec un récipient de réserve d'eau et avec une conduite de transport d'eau selon l'une quelconque des revendications 1 à 9.

11. Système d'arrosage de plantes selon la revendication 10, **caractérisé en ce qu'**un couvercle (BD) de la réserve d'eau forme une surface de pose pour un pot de fleur.

12. Utilisation d'un matériau non tissé pour une conduite de transport d'eau d'un système d'arrosage de plantes, **caractérisée en ce que** le matériau non tissé se compose au moins principalement de microfilaments (F11, F12, F13, F14, F21, F22, F23, F24) avec un titre moyen inférieur à 1,0 0 dTex et d' au moins deux matières plastiques différentes (11, 12, 13, 14, 21, 22, 23, 24) .

13. Utilisation selon la revendication 12, **caractérisée en ce que** des matières algicides, en particulier sous forme de fibres métalliques, sont intégrées dans le matériau non tissé.
